# EUROPÄISCHE PATENTSCHRIFT

(11) **EP 0 553 659 B1**
(45) Veröffentlichungstag und Bekanntmachung des Hinweises auf die Patenterteilung: **20.11.1996**
(21) Anmeldenummer: 93100529.2
(22) Anmeldetag: 15.01.1993
(51) Int. Cl.: B01D 47/06, B01D 53/34

(54) **Anordnung für zum Spritzen und Sprühen von Flüssigkeiten dienende Düsen für Abgaswäscher**
Positioning of injectors for injecting and pulverising liquids in a gas washing device
Disposition des jigleurs qui servent à injecter et pulvériser des liquides pour un laveur de gaz

(30) Priorität: 30.01.1992 DE 4202587
(43) Veröffentlichungstag der Anmeldung: 04.08.1993
(73) Patentinhaber: Fette, Dorothea, D.32107 Bad Salzuflen (DE)
(72) Erfinder: Fette, Dietrich, (DE); Friedemann, Ingwalt, Dr., D-06118 Halle (DE)
(74) Vertreter: Depmeyer, Lothar

(56) Entgegenhaltungen:
- AU-A- 425 585
- DE-A- 4 033 786
- DE-A- 4 033 787
- DE-C- 179 626
- US-A- 1 543 941
- US-A- 3 431 707

## Beschreibung

Die Erfindung betrifft eine Vorrichtung zum Waschen von Abgasen mit einem Raum oder Kanal zum Einleiten der Abgase, an dessen Umfang zum Spritzen und Sprühen von Flüssigkeit dienende Düsen angeordnet sind.

Es ist bekannt, in das Abgas ggfs. mit Zusätzen versehenes Wasser einzuspritzen bzw. einzusprühen, um die Abgasreinigung zu verbessern. Hierbei ist sowohl das Gegenstrom- als auch das Gleichstromprinzip möglich, wenngleich die Erfindung vorzugsweise bei Gleichstromanlagen Anwendung finden soll.

Bei einer bekannten Vorrichtung der eingangs genannten Art (AU-A-425 585) sind in einem zylindrischen Kanal in mehreren Ebenen auf dem Umfang Düsen angeordent, die Sprühkegel aufweisen, deren Hauptwirkrichtungen im wesentlichen radial zum zylindrischen Kanal und senkrecht zur Strömungsrichtung der Abgase verlaufen. Mittig im Kanal befindet sich eine weitere Düse, deren Hauptwirkrichtung axial gerichtet ist, wobei diese Düse jedoch räumlich getrennt von den anderen Düsen angeordnet ist. Die Sprühkegel der axialen und radialen Düsen beeinflussen einander nicht.

Bei einer anderen derartigen Vorrichtung (US-A-1 543 941) sind die Hauptwirkrichtungen der Düsen gleichsinnig im Winkel zur Radialen ausgerichtet, d.h. sie weisen tangentiale Anteile gleicher Richtung auf, wodurch Wirbel entstehen, welche einen intensiveren Kontakt von Wasser und Abgas bewirken.

Die Erfindung geht von der Erkenntnis aus, daß zwar bestimmte Anstellwinkel der Düsen bereits Verbeserungen bringen können, daß aber wesentliche Fortschritte auf diesem Wege nicht erzielt werden können.

Aufgrund der Erfindung soll eine wesentliche Steigerung der Effektivität des Wäschers erreicht werden, ohne dazu vergleichsweise größere Energien aufwenden zu müssen.

Diese Aufgabe wird erfindungsgemäß dadurch gelöst, daß die Hauptwirkrichtung der Düsen einer ersten Düsengruppe in der Projektion auf eine Querschnittsebene des Wäschers im wesentlichen radial verläuft, und daß die Hauptwirkrichtung der Düsen einer zweiten Düsengruppe im Winkel zur Hauptwirkrichtung der Düsen der ersten Gruppe verläuft, und zwar in der Weise, daß die Düsen der zweiten Gruppe mit ihren Flüssigkeitskegeln auf die Strahlkegel der Düsen der ersten Gruppe einwirken, wobei die Düsen der ersten Gruppe Strahldüsen und die Düsen der zweiten Gruppe Sprühdüsen sind, und wobei die Düsen der zweiten Gruppe mit der zugehörigen Radialen des Wäschers einen Winkel von etwa 30 - 60° und mit der Hauptachse (Mittelachse 3) des Wäschers einen Winkel von etwa 30 - 60 ° einschließen und über den Umfang des Wäschers verteilt angeordnet sind und ihre Wirkrichtung Ober den Wäscherumfang gesehen gleichsinnig ist.

Die Düsen der ersten Gruppe können in vorteilhatfter Weise im wesentlichen in Richtung der Hauptachse des Wäschers zeigen, z.B. mit dieser Achse Winkel von etwa 15° einschließen.

Die unterschiedlich verlaufenden Düsenachsen bzw. die entsprechend gerichteten, von den Düsen erzeugten Kegel führen zu massenhaften Kollisionen der Tropfen sowohl der Tropfen einer Düse als auch der Tropfen verschiedener Düsen mit dem Ziel eines Tropfenzerfalls unter Bildung kleinerer Tropfen bzw. größerer Wirkflächen sowie einer intensiven Bewegung der Tropfenoberfläche. Zudem wird bei dem vorerwähnten gleichsinnigen Schräganstieg der Düsen der zweiten Gruppe ein Drall- oder Rotationseffekt angestrebt, der zu einer entsprechenden Reaktion bei den anderen Düsenkegeln führt.

Weitere Einzelheiten der Erfindung werden anhand der Zeichnung erläutert, in der ein Ausführungsbeispiel der Erfindung dargestellt ist.

Es zeigen :
- Fig. 1: den oberen Teil eines Rauchgaswäschers im senkrechten Schnitt,
- Fig. 2: einen senkrechten Teilschnitt durch den Wäscher gemäss Fig. 1 ausserhalb der Zeichenebene und
- Fig. 3: einen Schnitt nach der Linie III - III von Fig. 1.

Dem senkrecht angeordneten Wäscher 1 mit einem zylindrischen Behälter 2 mit Mittelachse 3 wird von oben her über eine Zuleitung 4 das Rauchgas zugeführt. Das Rauchgas verlässt den Behälter 2 nach unten hin; es kann einem weiteren Wäschertrakt von unten her zugeführt werden, an den sich oben ein Schornstein anschliesst. Im Übergangsbereich 5 zwischen der Zuleitung 4 und dem Behälter 2 ist der Wäscher doppelwandig gehalten und dort mit einem Düsenkranz versehen, der Strahldüsen 6 und Sprühdüsen 7 aufweist, die im wesentlichen in einer Höhe des Wäschers 1 angeordnet sind und zum Durchleiten von Wasser ggfs. mit Zusätzen dienen in der Weise, dass sich ein Gleichstromprinzip ergibt.

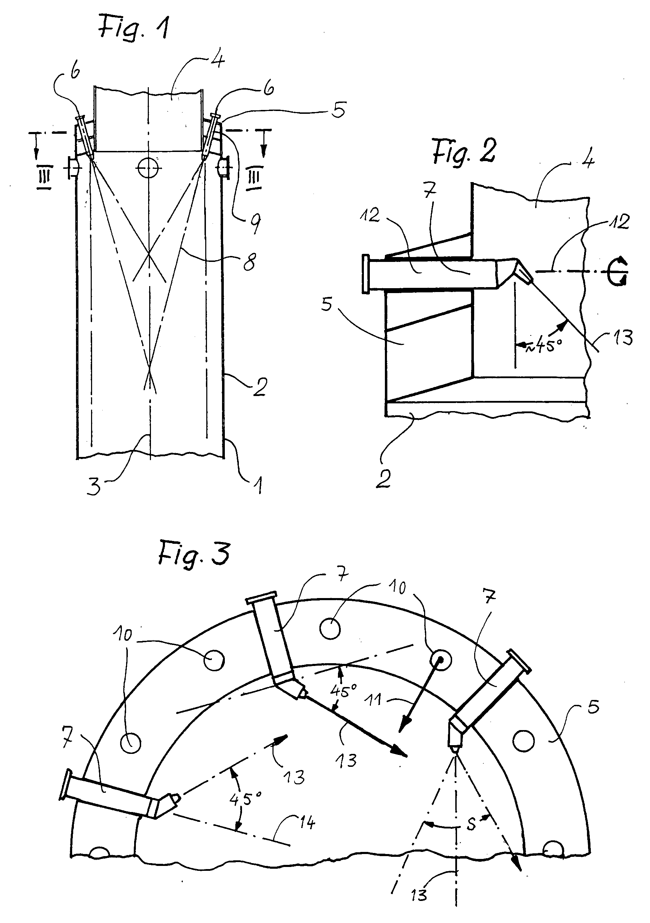

Wie aus Fig. 1 hervorgeht, stehen die Strahldüsen 6 steil an; ihre Wirkrichtung stimmt mit der Längsachse 8 des Düsenträgers 9 überein. Diese Achse verläuft gemäss Fig. 3 radial und gemäss Fig. 1 unter einem spitzen Winkel von etwa 15° zur Mittelachse 3. Der sich einstellende Strahlkegel beträgt etwa 6o°. In der Schnittdarstellung gemäss Fig. 3 sind die Strahldüsen 6 lediglich durch Kreise bei 1o angedeutet, die die Durchbrechungen im Übergangsbereich 5 darstellen sollen, in denen die Düsenträger angeordnet sind. Wie Fig. 3 erkennen lässt, sind die Strahldüsen 6 auch paarweise angeordnet. Die Wirkrichtung der Strahldüsen 6 ist im übrigen in Fig. 3 durch einen radial verlaufenden Pfeil 11 angezeigt.

Zwischen einem Paar aus den Strahldüsen 6 ist je eine Sprühdüse 7 mit waagerecht angeordnetem Düsenträger 12 vorgesehen, der verdrehbar und verstellbar in einer zylindrischen Durchbrechung des Übergangsbereichs 5 gelagert ist. Vorne ist der Düsenträger 12 gekröpft unter Bildung eines Düsenkörpers, der etwa unter 45° zur Längsachse des Düsenträgers 12 bzw. zur Waagerechten ansteht und,zwar schräg nach unten ( vgl. Fig. 2 ). Zudem sind die Düsenkörper der Sprühdüsen 7 aber auch so an geordnet, dass die Düsenachse 13 mit der zugehörigen Radialen 14 einen Winkel von 45° und dem Pfeil 11 einen Winkel von etwa 9o° einschliesst, jedoch im Hinblick auf weitere, benachbarte Strahldüsen 6 Winkel von etwa 6o - 11o° einschliessen kann.

Wie Fig. 3 weiterhin erkennen lässt, verlaufen die Wirkrichtungen aufeinanderfolgender Sprühdüsen 7 - in Umfangsrichtung des Wäschers 1 gesehen - gleichsinnig, also in eine Richtung, um so einen Drall- oder Rotationseffekt zu erzielen. Der Öffnungswinkel bzw. Kegelwinkel S der Sprühdüsen 7 beträgt zudem etwa 70 - 90°.

Demgemäss wirkt der von den Sprühdüsen 7 erzeugte Flüssigkeitskegel schräg bzw. im rechten Winkel auf den Strahlkegel der Strahldüsen 6 ein; es ergeben sich Massenkollisionen, die zu einem Zerfall der Tröpfchen führen, wobei sich die effektive Tropfenoberfläche vergrössert, die ihrerseits intensivere Bewegungen ausführt. Dadurch wird die Betriebssicherheit des Wäschers erhöht, der Energieeinsatz für den Antrieb der Pumpen und andere Elektrogeräte bleibt dabei in vertretbaren Grenzen.

## Patentansprüche

1. Vorrichtung zum Waschen von Abgasen mit einem Raum oder Kanal zum Einleiten der Abgase, an dessen Umfang zum Spritzen und Sprühen von Flüssigkeit dienende Düsen angeordnet sind, wobei die Hauptwirkrichtung der Düsen (6) einer ersten Düsengruppe in der Projektion auf eine Querschnittsebene des Wäschers (1) im wesentlichen radial verläuft und die Hauptwirkrichtung der Düsen (7) einer zweiten Düsengruppe im Winkel zur Hauptwirkrichtung der Düsen (6) der ersten Gruppe verläuft, dadurch gekennzeichnet, daß die Düsen (7) der zweiten Gruppe mit ihren Flüssigkeitskegeln auf die Strahlkegel der Düsen (6) der ersten Gruppe einwirken, wobei die Düsen (6) der ersten Gruppe Strahldüsen und die Düsen (7) der zweiten Gruppe Sprühdüsen sind, und wobei die Düsen (7) der zweiten Gruppe mit der zugehörigen Radialen (14) des Wäschers (1) einen Winkel von etwa 30 - 60° und mit der Hauptachse (3) des Wäschers (1) einen Winkel von etwa 30 - 60 ° einschließen und über den Umfang des Wäschers verteilt angeordnet sind und ihre Wirkrichtung über den Wäscherumfang gesehen gleichsinnig ist.

2. Vorrichtung nach Anspruch 1, dadurch gekennzeichnet, daß die Düsen (6, 7) beider Gruppen im wesentlichen in einer Querebene des Wäschers (1) angeordnet sind.

3. Vorrichtung nach Anspruch 1, dadurch gekennzeichnet, daß die Kegel der Düsen (6, 7) beider Gruppen im wesentlichen in Abgasströmrichtung weisen.

4. Vorrichtung nach Anspruch 1 dadurch gekennzeichnet, daß der Düsenanstellwinkel der Düsen (7) der zweiten Gruppe durch Verdrehen ihres Trägers veränderbar ist.

5. Vorrichtung nach Anspruch 1 dadurch gekennzeichnet, daß die Düsen (6) der ersten Gruppe zu zwei oder mehreren zusammengefaßt und die Düsen (7) der zweiten Gruppe zwischen den zu zweit oder zu mehreren zusammengefaßten Düsen (6) der ersten Gruppe angeordnet sind.

6. Vorrichtung nach Anspruch 1 dadurch gekennzeichnet, daß der Sprühkegel der Düsen (7) der zweiten Gruppe etwa 70 - 90° beträgt.

7. Vorrichtung nach Anspruch 1 dadurch gekennzeichnet, daß die Düsen (6) der ersten Gruppe einen spitzen Winkel von etwa 15° mit der Hauptachse (3) des Wäschers einschließen und daß ihr Kegel im wesentlichen 30° beträgt.

## Claims

1. Apparatus for the washing of waste gases, having a chamber or duct for the introduction of the waste gases, on the circumference of which chamber or duct nozzles for the injecting and spraying of liquid are disposed, the main operational direction of the nozzles (6) of a first group of nozzles extending substantially radially in the projection relative to a cross-sectional plane of the washer (1), and the main operational direction of the nozzles (7) of a second group of nozzles extending at an angle to the main operational direction of the nozzles (6) of the first group, characterised in that the nozzles (7) of the second group act with their liquid cones upon the discharge cones of the nozzles (6) of the first group, the nozzles (6) of the first group being jet nozzles, and the nozzles (7) of the second group being spray nozzles, and the nozzles (7) of the second group forming an angle of approximately 30 - 60° with the associated radial line (14) of the washer (1) arid an angle of approximately 30 - 60° with the main axis (3) of the washer (1) and being distributed over the circumference of the washer, and their operational direction being the sac when viewed over the washer circumference.

2. Apparatus according to claim 1, characterised in that the nozzles (6, 7) of both groups are disposed substantially in a transverse plane of the washer (1).

3. Apparatus according to claim 1, characterised in that the cones of the nozzles (6, 7) of both groups point substantially in the direction of flow of the waste gases.

4. Apparatus according to claim 1, characterised in that the angular disposition of the nozzles (7) of the second group can he varied by rotating their holder.

5. Apparatus according to claim 1, characterised in that the nozzles (6) of the first group are grouped in twos or more, and the nozzles (7) of the second group are disposed between the nozzles (6) of the first group which are grouped in twos or more.

6. Apparatus according to claim 1, characterised in that the spray cone of the nozzles (7) of the second group is approximately 70 - 90°.

7. Apparatus according to claim 1, characterised in that the nozzles (6) of the first group form an acute angle Of approximately 15° with the main axis (3) of the washer, and in that their cone is substantially 30°.

## Revendications

1. Dispositif de lavage de gaz perdus, comprenant une chambre ou un canal d'introduction des gaz perdus, sur le pourtour duquel sont disposés des gicleurs servant à projeter et à pulvériser du liquide, le sens d'action principal des gicleurs (6) d'un premier groupe de gicleurs s'étendant essentiellement radialement dans la projection sur un plan transversal du laveur (1) et le sens d'action principale des gicleurs (7) d'un deuxième groupe de gicleurs s'étendant en faisant un angle avec le sens d'action principal des gicleurs (6) du premier groupe, caractérisé en ce que les gicleurs (7) du deuxième groupe agissent par leur cône de liquide sur le cône de projection des gicleurs (6) du premier groupe, des gicleurs (6) du premier groupe étant des gicleurs à jet et les gicleurs (7) du deuxième groupe des gicleurs à pulvérisation, les gicleurs (7) du deuxième groupe faisant avec les rayons (14) correspondants du laveur (1) un angle de 30 à 60° environ et avec l'axe principal (3) du laveur (1) un angle de 30 à 60° environ et étant répartis sur le pourtour du laveur, leur direction d'action étant, considérée sur le pourtour du laveur, de même sens.

2. Dispositif suivant la revendication 1, caractérisé en ce que les gicleurs (6, 7) des deux groupes sont disposés sensiblement dans un plan transversal du laveur (1).

3. Dispositif suivant la revendication 1, caractérisé en ce que les cônes des gicleurs (6,7) des deux groupes sont tournés sensiblement dans le sens du courant de gaz perdu.

4. Dispositif suivant la revendication 1, caractérisé en ce que l'angle d'incidence des gicleurs (7) du deuxième groupe peut être modifié par rotation de leur support.

5. Dispositif suivant la revendication 1, caractérisé en ce que les gicleurs (6) du premier groupe sont rassemblés par deux ou par plusieurs et les gicleurs (7) du deuxième groupe sont disposés entre les gicleurs du premier groupe qui sont rassemblés par deux ou par plusieurs.

6. Dispositif suivant la revendication 1, caractérisé en ce que le cône de projection des gicleurs (7) du deuxième groupe est d'environ 70 à 90°.

7. Dispositif suivant la revendication 1, caractérisé en ce que les gicleurs (6) de premier groupe font un angle aigu d'environ 15° avec l'axe principal (3) du laveur et leur cône est sensiblement de 30°.
